# EUROPEAN PATENT APPLICATION

(11) **EP 4 618 232 A1**
(43) Date of publication of application: **17.09.2025**
(21) Application number: 25163346.7
(22) Date of filing: 12.03.2025
(51) Int. Cl.: H01M 10/42, H01M 50/15, H01M 50/164, H01M 50/30

(54) **COVER PLATE ASSEMBLY, BATTERY, ENERGY STORAGE DEVICE, AND POWER CONSUMING DEVICE**

(30) Priority: 15.03.2024 CN 202420520234 U
(71) Applicant: BYD Company Limited, Shenzhen, Guangdong 518118 (CN)
(72) Inventor: ZHAN, Yingxin, Shenzhen, 518118 (CN); WAN, Liyang, Shenzhen, 518118 (CN); CAO, Bingxu, Shenzhen, 518118 (CN); YUAN, Wansong, Shenzhen, 518118 (CN)
(74) Representative: Taor, Simon Edward William

(57) **Abstract**

A cover plate assembly, a battery, an energy storage device, and a power consuming device. The cover plate assembly includes a cover plate and an insulating plate. The insulating plate is arranged on a side of the cover plate, a terminal hole for a terminal to pass through is provided on the cover plate and the insulating plate, and a chip embedding hole for fixing a chip is provided on the insulating plate. In the cover plate assembly according to embodiments of the present disclosure, the chip embedding hole is provided on the insulating plate, so that the chip can be fixed in the chip embedding hole. Therefore, connection between the chip and the insulating plate becomes tighter, and connection between the chip and the cover plate assembly becomes tighter, thereby reducing looseness and displacement of the chip, helping improve the stability and reliability of function operation of the chip, and helping improve the structure compactness of the cover plate assembly.

## Description

### FIELD

The present disclosure relates to the field of power battery technologies, and specifically, to a cover plate assembly, a battery, an energy storage device, and a power consuming device.

### BACKGROUND

A power battery is a core of new energy vehicles and is crucial to the development of new energy vehicles. However, with the rapid development of vehicle electrification, the safety of the power battery has attracted widespread attention of people.

**In** the related art, to improve the safety of the power battery, a chip including a detection structure is arranged, and the chip can monitor a change of an internal status of a battery pack to provide safety early warning. However, the chip is fixed through a wiring harness in a battery, making the chip to be easily loosened and separated. Therefore, there is room for improvement.

### SUMMARY

The present disclosure aims to at least resolve one of the foregoing technical problems in the existing technology to some extent. Therefore, the present disclosure provides a cover plate assembly, which can embed a chip in an insulating plate, to improve the stability and reliability of fixing the chip.

The present disclosure further provides a battery.

The present disclosure further provides an energy storage device.

The present disclosure further provides a power consuming device.

The cover plate assembly according to embodiments of the present disclosure comprises a cover plate and an insulating plate, the insulating plate is arranged on a side of the cover plate, a terminal hole for a terminal to pass through is provided on the cover plate and the insulating plate, and a chip embedding hole for fixing a chip is provided on the insulating plate.

In the cover plate assembly according to the embodiments of the present disclosure, the chip embedding hole is provided on the insulating plate, so that the chip can be fixed in the chip embedding hole. Therefore, connection between the chip and the insulating plate becomes tighter, and connection between the chip and the cover plate assembly becomes tighter, thereby reducing looseness and displacement of the chip, helping improve the stability and reliability of function operation of the chip, and helping improve the structure compactness of the cover plate assembly.

In some embodiments, the chip embedding hole is provided on a side surface of the insulating plate facing away from the cover plate.

In some embodiments, the cover plate assembly further includes a chip fixing buckle, the chip fixing buckle is arranged on the insulating plate, a chip accommodating space for fixing the chip is formed between the chip fixing buckle and the chip embedding hole, and the chip fixing buckle is configured to fix the chip to the chip embedding hole.

In some embodiments, a clamping seam is provided on the insulating plate, one end of the chip fixing buckle is snapped into the clamping seam, and the other end of the chip fixing buckle and a hole wall of the chip embedding hole jointly define the chip accommodating space.

In some embodiments, the terminal hole includes a positive terminal hole and a negative terminal hole, and the chip embedding hole is located between the positive terminal hole and the negative terminal hole.

In some embodiments, the chip embedding hole is a blind hole, a depth of the chip embedding hole ranges from 0.5 mm to 7 mm, and in an axial direction of the chip embedding hole, a remaining thickness of the insulating plate ranges from 0.5 mm to 7.5 mm; and/or a thickness of the cover plate ranges from 0.5 mm to 5 mm.

In some embodiments, a length of the chip embedding hole ranges from 2 mm to 25 mm, and a width of the chip embedding hole ranges from 2 mm to 20 mm.

In some embodiments, the terminal hole is a positive terminal hole, a liquid injection hole is provided on the cover plate and the insulating plate, and the chip embedding hole is located between the positive terminal hole and the liquid injection hole.

In some embodiments, the terminal hole is a negative terminal hole, an anti-explosion valve hole is provided on the cover plate and the insulating plate, and the chip embedding hole is located between the negative terminal hole and the anti-explosion valve hole.

In some embodiments, the chip embedding hole is a blind hole, a depth of the chip embedding hole ranges from 0.5 mm to 4 mm, and in an axial direction of the chip embedding hole, a remaining thickness of the insulating plate ranges from 0.5 mm to 3.5 mm; and/or a thickness of the cover plate ranges from 0.5 mm to 5 mm.

In some embodiments, a length of the chip embedding hole ranges from 2 mm to 25 mm, and a width of the chip embedding hole ranges from 2 mm to 20 mm.

The battery according to the embodiments of a second aspect of the present disclosure includes a positive terminal, a negative terminal, a housing body, a chip assembly, and the cover plate assembly according to the embodiments of the present disclosure. At least one of the positive terminal and the negative terminal is provided in the terminal hole. At least one end of the housing body is an open end, and the cover plate assembly is arranged at the open end. The chip assembly includes a chip, a positive member, and a negative member. The chip is embedded in the chip embedding hole and includes a circuit board and a detection structure, the circuit board is provided with an integrated circuit, the detection structure is electrically connected to the circuit board, one end of the positive member is electrically connected to the circuit board, the other end of the positive member is adapted to connect to the positive terminal, one end of the negative member is electrically connected to the circuit board, and the other end of the negative member is adapted to connect to the negative terminal.

In the battery according to the embodiments of the present disclosure, the chip can be embedded in the chip embedding hole, so that the chip is fixed to the cover plate assembly more firmly and stably, thereby improving an integration degree of the chip assembly and the cover plate assembly, improving a structural integration degree of the chip assembly and the battery, and helping improve the structure compactness. The detection structure is electrically connected to the circuit board, and the circuit board is electrically connected to the battery through the positive member and the negative member. That is, the battery can supply power to the detection structure, and the battery can further supply power to the chip assembly. In this way, the battery and the chip assembly form an integral and self-powered battery chip assembly, and there is no need to arrange an external power supply to supply power to the chip assembly, thereby improving the integration of the battery and the chip assembly. The chip assembly is arranged in a housing of the battery, and the chip assembly can monitor a single battery, so that temperature, air pressure, and stress changes of the battery can be effectively monitored, and an internal status of the battery can be reflected more accurately. In addition, the chip embedding hole is provided on the insulating plate, so that the chip can be fixed in the chip embedding hole. Therefore, connection between the chip and the insulating plate becomes tighter, and connection between the chip and the cover plate assembly becomes tighter, thereby reducing looseness and displacement of the chip, and helping improve the stability and reliability of function operation of the chip.

In some embodiments, the chip further includes a wireless transmission structure, the wireless transmission structure is electrically connected to the circuit board, and the wireless transmission structure is at least configured to transmit a signal detected by the detection structure to an external device in a wireless communication manner.

In some embodiments, the battery further includes an electrode core, the electrode core is arranged in the housing body, the electrode core includes a positive tab and a negative tab, the positive member and the positive tab are connected to the positive terminal, and the negative member and the negative tab are connected to the negative terminal.

In some embodiments, the detection structure includes a detection belt, one end of the detection belt is connected to the circuit board, and the other end of the detection belt is adapted to be inserted into the electrode core.

In some embodiments, the cover plate assembly includes a positive cover plate assembly and a second negative cover plate assembly, the positive cover plate assembly is arranged at one end of the housing body, the positive cover plate assembly includes the chip embedding hole, the positive terminal is arranged on the positive cover plate assembly, the second negative cover plate assembly is arranged at the other end of the housing body, and the negative terminal is arranged in a negative terminal hole on the second negative cover plate assembly.

In some embodiments, the cover plate assembly includes a negative cover plate assembly and a second positive cover plate assembly, the negative cover plate assembly is arranged at one end of the housing body, the negative cover plate assembly includes the chip embedding hole, the negative terminal is arranged on the negative cover plate assembly, the second positive cover plate assembly is arranged at the other end of the housing body, and the positive terminal is arranged in a positive terminal hole on the second positive cover plate assembly.

In some embodiments, the positive member is electrically connected to the circuit board through a first wire; and/or the negative member is electrically connected to the circuit board through a second wire.

The energy storage device according to the embodiments of a third aspect of the present disclosure includes multiple batteries according to the embodiments of the present disclosure.

The energy storage device according to the embodiments of the present disclosure includes the battery according to the embodiments of the present disclosure, and by arranging the battery, the safety of the power consuming device can be improved. The chip can be embedded in the chip embedding hole, so that the chip is fixed to the insulating plate more firmly and stably, thereby improving an integration degree of the chip assembly and the cover plate assembly, and improving a structural integration degree of the chip assembly and the battery. The detection structure is electrically connected to the circuit board, and the circuit board is electrically connected to the battery through the positive member and the negative member. That is, the battery can supply power to the detection structure, and the battery can further supply power to the chip assembly. In this way, the battery and the chip assembly form an integral and self-powered battery chip assembly, and there is no need to arrange an external power supply to supply power to the chip assembly, thereby improving the integration of the battery and the chip assembly. In addition, the chip assembly is arranged in a housing of the battery, and the chip assembly can monitor a single battery, so that temperature, air pressure, and stress changes of the battery can be effectively monitored, and an internal status of the battery can be reflected more accurately. In addition, the chip embedding hole is provided on the insulating plate, so that the chip can be fixed in the chip embedding hole. Therefore, connection between the chip and the insulating plate becomes tighter, and connection between the chip and the cover plate assembly becomes tighter, thereby reducing looseness and displacement of the chip, helping improve the stability and reliability of function operation of the chip, and helping improve the structure compactness.

The power consuming device according to the embodiments of a fourth aspect of the present disclosure includes the energy storage device according to the embodiments of the present disclosure.

In the power consuming device according to the embodiments of the present disclosure, by arranging the foregoing energy storage device, the safety of the power consuming device can be improved. The chip can be embedded in the chip embedding hole, so that the chip is fixed to the insulating plate more firmly and stably, thereby improving an integration degree of the chip assembly and the cover plate assembly, and improving a structural integration degree of the chip assembly and the battery. The detection structure is electrically connected to the circuit board, and the circuit board is electrically connected to the battery through the positive member and the negative member. That is, the battery can supply power to the detection structure, and the battery can further supply power to the chip assembly. In this way, the battery and the chip assembly form an integral and self-powered battery chip assembly, and there is no need to arrange an external power supply to supply power to the chip assembly, thereby improving the integration of the battery and the chip assembly. In addition, the chip assembly is arranged in a housing of the battery, and the chip assembly can monitor a single battery, so that temperature, air pressure, and stress changes of the battery can be effectively monitored, and an internal status of the battery can be reflected more accurately. In addition, the chip embedding hole is provided on the insulating plate, so that the chip can be fixed in the chip embedding hole. Therefore, connection between the chip and the insulating plate becomes tighter, and connection between the chip and the cover plate assembly becomes tighter, thereby reducing looseness and displacement of the chip, helping improve the stability and reliability of function operation of the chip, and helping improve the structure compactness.

Additional aspects and advantages of the present disclosure will be given in the following description, some of which will become apparent from the following description or may be learned from practices of the present disclosure.

### BRIEF DESCRIPTION OF THE DRAWINGS

FIG. 1 is a schematic diagram of a main cover plate assembly, a positive terminal, and a negative terminal according to an embodiment of the present disclosure;
FIG. 2 is a schematic diagram of a negative cover plate assembly and a negative terminal according to an embodiment of the present disclosure;
FIG. 3 is a schematic diagram of a positive cover plate assembly and a positive terminal according to an embodiment of the present disclosure;
FIG. 4 is a schematic diagram of a chip assembly according to an embodiment of the present disclosure;
FIG. 5 is a schematic diagram of a chip assembly including a first wire according to an embodiment of the present disclosure;
FIG. 6 is a schematic diagram of a chip assembly including a second wire according to an embodiment of the present disclosure;
FIG. 7 is a schematic diagram of a chip assembly including a first wire and a second wire according to an embodiment of the present disclosure;
FIG. 8 is a schematic diagram of assembly of a main cover plate assembly and a chip assembly according to an embodiment of the present disclosure;
FIG. 9 is a schematic diagram of assembly of a positive cover plate assembly and a chip assembly according to an embodiment of the present disclosure;
FIG. 10 is a schematic diagram of assembly of a negative cover plate assembly and a chip assembly according to an embodiment of the present disclosure;
FIG. 11 is a schematic diagram of assembly of a positive cover plate assembly, a second negative cover plate assembly, a chip assembly, and an electrode core according to an embodiment of the present disclosure;
FIG. 12 is a schematic diagram of assembly of a negative cover plate assembly, a second positive cover plate assembly, a chip assembly, and an electrode core according to an embodiment of the present disclosure;
FIG. 13 is a schematic diagram of assembly of a second positive cover plate assembly, a second negative cover plate assembly, a chip assembly including a first wire and a second wire, and an electrode core according to an embodiment of the present disclosure;
FIG. 14 is a schematic diagram of a battery according to an embodiment of the present disclosure;
FIG. 15 is a schematic diagram of an energy storage device according to an embodiment of the present disclosure; and
FIG. 16 is a schematic diagram of a power consuming device according to an embodiment of the present disclosure.

List of reference numerals:
2000-power consuming device, 1000-energy storage device, 100-chip assembly, 200-battery, 300-cover plate assembly, 300a-positive cover plate assembly, 300b-negative cover plate assembly, 320a-second positive cover plate assembly, 320b-second negative cover plate assembly, 300c-main cover plate assembly, 10-chip, 101-positive member, 102-negative member, 11-first wire, 12-second wire, 13-detection belt, 2-cover plate, 20-electrode core, 201-positive tab, 202-negative tab, 21-positive cover plate, 21d-second positive cover plate, 211-positive terminal, 212-liquid injection hole, 22-negative cover plate, 22d-second negative cover plate, 221-anti-explosion valve, 222-negative terminal, 23-main cover plate, 30-insulating layer, 4-insulating plate, 41-chip embedding hole, and 5-chip fixing buckle.

### DETAILED DESCRIPTION

The following describes embodiments of the present disclosure in detail. Examples of the embodiments are shown in the accompanying drawings, and same or similar reference signs in all the accompanying drawings indicate same or similar elements or elements having same or similar functions. The embodiments described below with reference to the accompanying drawings are exemplary, and are intended to explain the present disclosure and cannot be construed as a limitation to the present disclosure.

In the description of the present disclosure, the terms "first" and "second" are used only for the purpose of description, and should not be understood as indicating or implying relative importance or implicitly indicting a quantity of indicated technical features. Therefore, a feature defined by "first " or "second" may explicitly or implicitly include one or more such features. In the description of the present disclosure, unless otherwise specifically limited, "multiple" means at least two, for example, two or three.

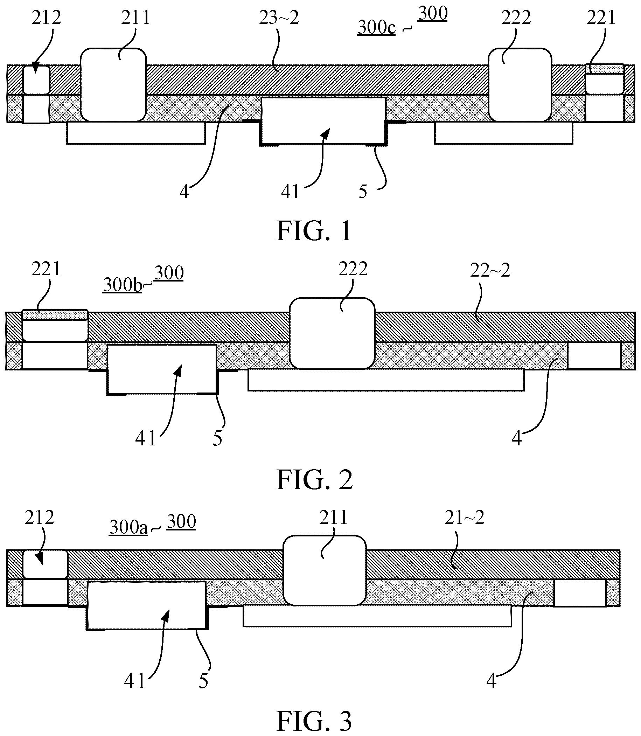

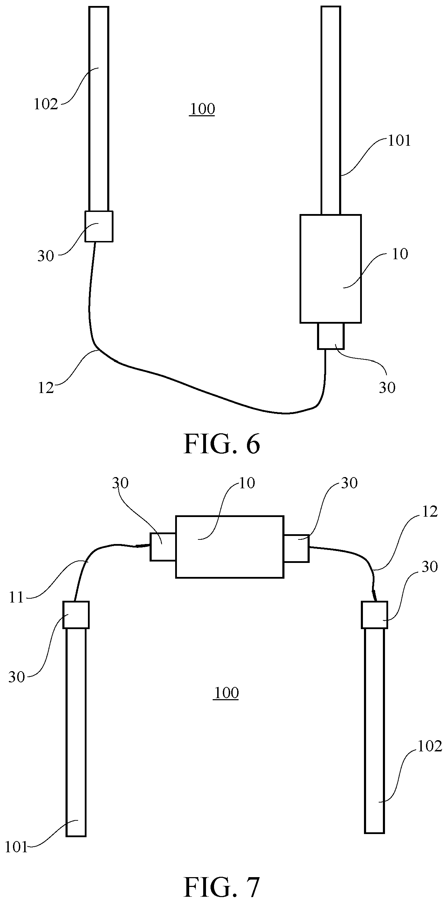

The following describes a cover plate assembly 300 according to the embodiments of the present disclosure in detail with reference to FIG. 1 to FIG. 16.

As shown in FIG. 1, the cover plate assembly 300 according to the embodiments of the present disclosure includes a cover plate 2 and an insulating plate 4. The insulating plate 4 is arranged on a side of the cover plate 2. A terminal hole is provided on the cover plate 2, and a terminal hole is provided on the insulating plate 4. A terminal can pass through the terminal hole of the cover plate 2 and the terminal hole of the insulating plate 4, so that the terminal can be exposed from one side of the cover plate 2 and one side of the insulating plate 4 and electrically connected to an external device.

A chip embedding hole 41 is further provided on the insulating plate 4, and the chip embedding hole 41 can fix a chip 10.

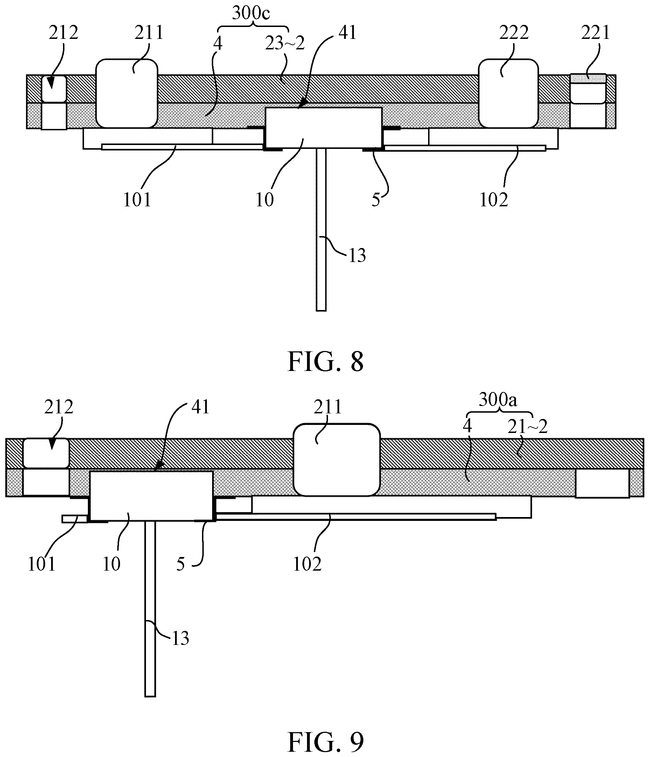

With reference to FIG. 1 and FIG. 8, in some technical solutions, the cover plate assembly 300 may be a main cover plate assembly 300c. The main cover plate assembly 300c includes a main cover plate 23 and an insulating plate 4. A positive terminal hole and a negative terminal hole are provided on the main cover plate 23 and the insulating plate 4. A positive terminal 211 can extend from the positive terminal hole, and a negative terminal 222 can extend from the negative terminal hole. A chip embedding hole 41 is further provided on the insulating plate 4.

With reference to FIG. 3, FIG. 9, and FIG. 11, in some technical solutions, the cover plate assembly 300 may be a combination of a positive cover plate assembly 300a and a second negative cover plate assembly 320b. The positive cover plate assembly 300a includes a positive cover plate 21 and the insulating plate 4. A terminal hole is provided on the positive cover plate 21 and the insulating plate 4. The terminal hole includes only a positive terminal hole. The positive terminal 211 can extend from the positive terminal hole, and the chip embedding hole 41 is further provided on the insulating plate 4. The second negative cover plate assembly 320b includes a second negative cover plate 22d and the insulating plate 4. A negative terminal hole is provided on the second negative cover plate 22d and the insulating plate 4, the chip embedding hole 41 is not provided, and the negative terminal 222 can extend from the negative terminal hole.

With reference to FIG. 2, FIG. 10, and FIG. 12, in some technical solutions, the cover plate assembly 300 may be a combination of a negative cover plate assembly 300b and a second positive cover plate assembly 320a. The negative cover plate assembly 300b includes a negative cover plate 22 and the insulating plate 4. A terminal hole is provided on the negative cover plate 22 and the insulating plate 4, the terminal hole includes only a negative terminal hole. The negative terminal 222 can extend from the negative terminal hole, and the chip embedding hole 41 is further provided on the insulating plate 4. The second positive cover plate assembly 320a includes a second positive cover plate 21d and the insulating plate 4. A positive terminal hole is provided on the second positive cover plate 21d and the insulating plate 4, the chip embedding hole 41 is not provided, and the positive terminal 211 can extend from the positive terminal hole.

It should be further noted that, the chip embedding hole 41 is recessed in a thickness direction of the insulating plate 4. For example, a depth of the chip embedding hole 41 is less than a thickness of a plate body of the insulating plate 4. For another example, the depth of the chip embedding hole 41 may be equal to the thickness of the plate body of the insulating plate 4. In this case, the chip embedding hole 41 penetrates the plate body of the insulating plate 4 in the thickness direction of the insulating plate 4, to form a through hole. For another example, the depth of the chip embedding hole 41 may be greater than the thickness of the plate body of the insulating plate 4. The chip embedding hole 41 is divided into two parts, where a part of the chip embedding hole 41 is recessed in the thickness direction of the insulating plate 4, and the other part of the chip embedding hole 41 is formed through recessing in a thickness direction of the cover plate 2.

In the related art, the chip is connected to the cover plate through two electrode wires. However, in this connection manner relying on wires, the actual connection to the cover plate is not tight enough, which easily leads to loosening and displacement of the chip. In the present disclosure, the chip embedding hole 41 is provided on the insulating plate 4, so that the chip 10 can be fixed to the insulating plate 4 more firmly.

In the cover plate assembly 300 according to the embodiments of the present disclosure, the chip embedding hole 41 is provided on the insulating plate 4, so that the chip 10 can be fixed in the chip embedding hole 41. Therefore, connection between the chip 10 and the insulating plate 4 becomes tighter, and connection between the chip 10 and the cover plate assembly 300 becomes tighter, so that the chip 10 is connected to the cover plate assembly 300 to form an integral and stable structure, thereby reducing looseness and displacement of the chip 10, helping improve the stability and reliability of function operation of the chip 10, and helping improve the structure compactness of the cover plate assembly 300.

For example, the insulating plate 4 may be a plastic material member, for example, a polypropylene material member, or may be a rubber material member, a silicone material member, or the like.

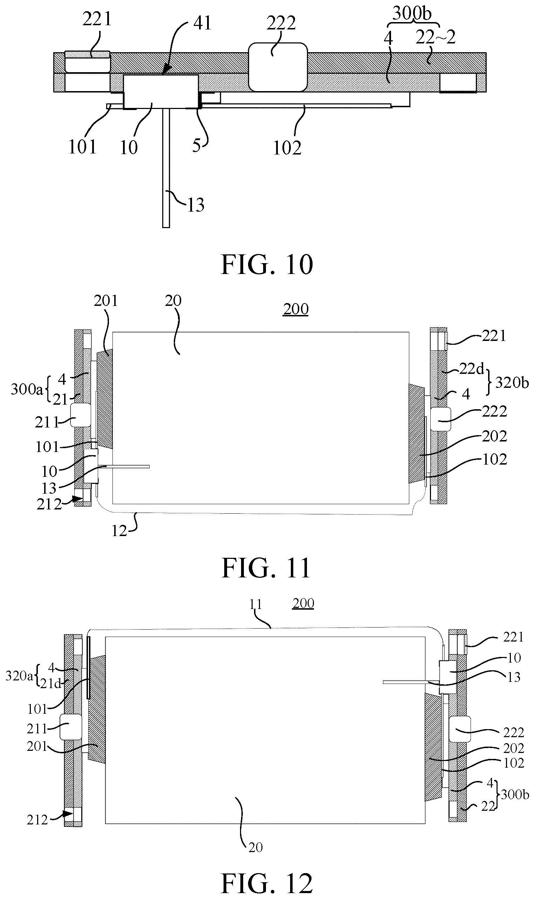

As shown in FIG. 1 to FIG. 3, in some specific embodiments, the chip embedding hole 41 is provided on a side surface of the insulating plate 4 facing away from the cover plate 2. By providing the chip embedding hole 41 in this way, the chip 10 can be mounted in the battery 200. As shown in FIG. 11, the structure of the chip embedding hole 41 is simpler, which improves the processing and assembly convenience, and improves the accuracy of detecting an internal signal of the battery 200 by the chip 10.

As shown in FIG. 1 to FIG. 3 and FIG. 8 to FIG. 10, in some embodiments, the cover plate assembly 300 further includes a chip fixing buckle 5, the chip fixing buckle 5 is arranged on the insulating plate 4, a chip accommodating space is formed between the chip fixing buckle 5 and the chip embedding hole 41, the chip accommodating space can accommodate the chip 10, and the chip fixing buckle 5 can fix the chip 10 in the chip accommodating space. By arranging the chip fixing buckle 5 to fix the chip 10, the stability and reliability of fixing the chip 10 can be facilitated, and looseness and displacement of the chip 10 can be reduced.

It should be further noted that, the chip fixing buckle 5 can abut the chip 10 against the chip embedding hole 41 to fix the chip 10. Optionally, the chip fixing buckle 5 may be a polypropylene material member.

In some embodiments, a clamping seam is provided on the insulating plate 4 (not shown in the figure), one end of the chip fixing buckle 5 may be snapped into the clamping seam, and the other end of the chip fixing buckle 5 and a hole wall of the chip embedding hole 41 may jointly define the chip accommodating space. On one hand, one end of the chip fixing buckle 5 is snapped into the clamping seam of the insulating plate 4, so that connection between the chip fixing buckle 5 and the insulating plate 4 becomes tighter, thereby improving the reliability and stability of the connection between the chip fixing buckle 5 and the insulating plate 4. On the other hand, the chip fixing buckle 5 can abut the chip 10 against the hole wall of the chip embedding hole 41, thereby reducing space occupied by the chip 10 and the chip fixing buckle 5, so that the chip 10 is fixed more firmly and has a more compact structure.

Optionally, an adhesive may be applied inside the chip embedding hole 41 of the insulating plate 4 or an external means such as an adhesive tape may be used to firmly adhere the chip 10 to the chip embedding hole 41 of the insulating plate 4.

As shown in FIG. 1 and FIG. 8, in some embodiments, the terminal hole of the main cover plate assembly 300c includes a positive terminal hole and a negative terminal hole, and the chip embedding hole 41 is located between the positive terminal hole and the negative terminal hole. That is, the chip 10 may be arranged in the chip embedding hole 41, the positive terminal 211 may be arranged in the positive terminal hole, the negative terminal may be arranged in the negative terminal hole, the positive member 101 of the chip 10 may be connected to the positive terminal 211, and the negative member 102 of the chip 10 may be connected to the negative terminal 222. In this way, connecting members for supplying power to and connected to the chip 10 can be reduced, and an integration degree of the chip 10 and the battery 200 can be improved, so that the structure is more compact.

As shown in FIG. 1 to FIG. 3 and FIG. 8 to FIG. 10, in some embodiments, the chip embedding hole 41 is a blind hole, a depth of the chip embedding hole 41 ranges from 0.5 mm to 7 mm, and in an axial direction of the chip embedding hole 41 (that is, in an up-down direction in FIG. 1 to FIG. 3 and FIG. 8 to FIG. 10), a remaining thickness of the insulating plate 4 ranges from 0.5 mm to 7.5 mm; and/or a thickness of the cover plate 2 ranges from 0.5 mm to 5 mm. That is, the insulating plate 4 is recessed in a thickness direction of the insulating plate 4 to form the chip embedding hole 41, and the chip embedding hole 41 does not penetrate the plate body of the insulating plate 4, thereby improving a structural strength of the insulating plate 4 and facilitating production and processing.

For example, when the positive terminal hole, the negative terminal hole, and the chip embedding hole 41 are located on the same cover plate 2 (the cover plate 2 is the main cover plate 23), the depth of the chip embedding hole 41 ranges from 0.5 mm to 7 mm. Optionally, the depth of the chip embedding hole 41 may be 0.5 mm, 0.8 mm, 1.0 mm, 2.4 mm, 3.7 mm, 4.5 mm, 6.2 mm, 7 mm, or the like. Certainly, the depth of the chip embedding hole 41 may alternatively be another value ranging from 0.5 mm to 7 mm, which is not listed one by one herein.

For example, when the positive terminal hole, the negative terminal hole, and the chip embedding hole 41 are located on the same cover plate assembly 300 (the cover plate assembly 300 is the main cover plate assembly 300c), in the axial direction of the chip embedding hole 41, a thickness of the insulating plate 4 ranges from 0.5 mm to 8 mm, and the remaining thickness of the insulating plate 4 ranges from 0.5 mm to 7.5 mm. Optionally, the thickness of the insulating plate 4 may be 0.5 mm, 0.7 mm, 1.0 mm, 1.4 mm, 2.8 mm, 3.1 mm, 4.6 mm, 6.8 mm, 7.5 mm, 8 mm, or the like. The remaining thickness of the insulating plate 4 is a difference between the thickness of the insulating plate 4 and the depth of the chip embedding hole 41, and the remaining thickness of the insulating plate 4 may be 0.5 mm, 0.9 mm, 1.2 mm, 2.7 mm, 3.4 mm, 4.1 mm, 6.9 mm, 7.5 mm, or the like. Certainly, the thickness of the insulating plate 4 may be another value ranging from 0.5 mm to 8 mm, and the remaining thickness of the insulating plate 4 may alternatively be another value ranging from 0.5 mm to 7 mm, which are not listed one by one herein.

For example, when the positive terminal hole, the negative terminal hole, and the chip embedding hole 41 are located on the same cover plate assembly 300 (the cover plate assembly 300 is the main cover plate assembly 300c), the thickness of the cover plate 2 ranges from 0.5 mm to 5 mm. Optionally, the thickness of the cover plate 2 may be 0.5 mm, 0.8 mm, 1.0 mm, 2.4 mm, 3.7 mm, 4.5 mm, 5 mm, or the like. Certainly, the thickness of the cover plate 2 may alternatively be another value ranging from 0.5 mm to 5 mm, which is not listed one by one herein.

In some embodiments, a length of the chip embedding hole 41 ranges from 2 mm to 25 mm, and a width of the chip embedding hole ranges from 2 mm to 20 mm. According to different types and different sizes of the chip 10, chip embedding holes 41 of different sizes may be manufactured, thereby improving the adaptability of the chip embedding hole 41 to the chip 10, and enabling the chip 10 to be connected and fitted with the chip embedding hole 41 more tightly.

For example, when the positive terminal hole, the negative terminal hole, and the chip embedding hole 41 are located on the same cover plate assembly 300 (the cover plate assembly 300 is the main cover plate assembly 300c), a shape of the chip embedding hole 41 may be a cuboid, a cube, a polygon, or the like.

Optionally, when the positive terminal hole, the negative terminal hole, and the chip embedding hole 41 are located on the same cover plate assembly 300 (the cover plate assembly 300 is the main cover plate assembly 300c), the length of the chip embedding hole 41 may be 2 mm, 5 mm, 7 mm, 11 mm, 14 mm, 18 mm, 21 mm, 23 mm, 25 mm, or the like; and the width of the chip embedding hole 41 may be 2 mm, 3 mm, 9 mm, 13 mm, 15 mm, 17 mm, 20 mm, or the like. Certainly, the length of the chip embedding hole 41 may alternatively be another value ranging from 2 mm to 25 mm, and the width of the chip embedding hole 41 may alternatively be another value ranging from 2 mm to 20 mm, which are not listed one by one herein.

For example, when the positive terminal hole, the negative terminal hole, and the chip embedding hole 41 are located on the same cover plate assembly 300, the chip fixing buckle 5 is connected to the insulating plate 4 in a snap-in manner. That is, the insulating plate 4 is provided with a clamping seam, and the clamping seam can accommodate the chip fixing buckle 5. A shape of the clamping seam may be a cuboid, or a shape of the clamping seam may be a cube, a depth of the clamping seam ranges from 0.1 mm to 4 mm, a length of the clamping seam ranges from 0.5 mm to 8 mm, and a width of the clamping seam ranges from 0.5 mm to 3 mm.

For example, when the positive terminal hole, the negative terminal hole, and the chip embedding hole 41 are located on the same cover plate assembly 300 (the cover plate assembly 300 is the main cover plate assembly 300c), there are four clamping seams on the insulating plate 4 corresponding to four corner positions of the chip embedding hole 41, and the clamping seams match four chip fixing buckles 5, so that the chip 10 can be better fixed.

As shown in FIG. 3, in some embodiments, the terminal hole is a positive terminal hole (the cover plate 2 is the positive cover plate 21), a liquid injection hole 212 is provided on the cover plate 2 and the insulating plate 4, and the chip embedding hole 41 is located between the positive terminal hole and the liquid injection hole 212. Specifically, in a length direction of the cover plate 2 and the insulating plate 4, the positive terminal hole, the chip embedding hole 41, and the liquid injection hole 212 are sequentially provided, and positions of the cover plate 2 and the insulating plate 4 are properly used, so that a structure of the cover plate assembly 300 is more compact, thereby facilitating production and processing.

As shown in FIG. 2, in some embodiments, the terminal hole is a negative terminal hole (the cover plate 2 is the negative cover plate 22), an anti-explosion valve hole is provided on the cover plate 2 and the insulating plate 4, and the chip embedding hole 41 is located between the negative terminal hole and the anti-explosion valve hole. The anti-explosion valve 221 may be arranged in the anti-explosion valve hole, thereby improving the safety of the battery 200. In the length direction of the cover plate 2 and the insulating plate 4, the negative terminal hole, the chip embedding hole 41, and the anti-explosion valve hole are sequentially provided, and the positions of the cover plate 2 and the insulating plate 4 are properly used, so that a structure of the cover plate assembly 300 can be more compact, thereby facilitating production and processing.

As shown in FIG. 2 and FIG. 3, in some embodiments, when the cover plate 2 is the positive cover plate 21 or when the cover plate 2 is the negative cover plate 22, the chip embedding hole 41 is a blind hole, a depth of the chip embedding hole 41 ranges from 0.5 mm to 4 mm, and in an axial direction of the chip embedding hole 41, a remaining thickness of the insulating plate 4 ranges from 0.5 mm to 3.5 mm; and/or a thickness of the cover plate 2 ranges from 0.5 mm to 5 mm. That is, the insulating plate 4 is recessed in a thickness direction of the insulating plate 4 to form the chip embedding hole 41, and the chip embedding hole 41 does not penetrate the plate body of the insulating plate 4, thereby improving a structural strength of the insulating plate 4 and facilitating production and processing.

It should be further noted that, with reference to FIG. 3, on the positive cover plate assembly 300a, the chip embedding hole 41 may be provided on the insulating plate 4 in which the positive terminal hole is located or on the insulating plate 4 and the positive cover plate 21. When a position of the chip embedding hole 41 is between the liquid injection hole 212 and the positive terminal 211, the chip embedding hole 41 is biased toward a side close to the liquid injection hole 212. On the negative cover plate assembly 300b, the chip embedding hole 41 may be provided on the insulating plate 4 in which the negative terminal hole is located or on the insulating plate 4 and the negative cover plate 22. A position of the chip embedding hole 41 is between the anti-explosion valve hole and the negative terminal 222, and the chip embedding hole 41 is biased toward a side close to the anti-explosion valve 221. With reference to FIG. 11 and FIG. 12, through this arrangement, interference between components during assembly of the battery 200 can be reduced, an assembly space and a proper arrangement position can be increased, and the assembly efficiency and an assembly effect can be improved.

On the positive cover plate assembly 300a or the negative cover plate assembly 300b, the depth of the chip embedding hole 41 may range from 0.5 mm to 4 mm. Optionally, the depth of the chip embedding hole 41 may be 0.5 mm, 0.8 mm, 1.0 mm, 2.4 mm, 3.7 mm, 4 mm, or the like. Certainly, the depth of the chip embedding hole 41 may alternatively be another value ranging from 0.5 mm to 4 mm, which is not listed one by one herein.

For example, on the positive cover plate assembly 300a or the negative cover plate assembly 300b, in the axial direction of the chip embedding hole 41, the remaining thickness of the insulating plate 4 ranges from 0.5 mm to 3.5 mm. The remaining thickness of the insulating plate 4 may be 0.5 mm, 0.9 mm, 1.2 mm, 2.7 mm, 3.4 mm, 3.5 mm, or the like. Certainly, the remaining thickness of the insulating plate 4 may alternatively be another value ranging from 0.5 mm to 3.5 mm, which is not listed one by one herein.

For example, on the positive cover plate assembly 300a or the negative cover plate assembly 300b, the thickness of the cover plate 2 ranges from 0.5 mm to 5 mm. Optionally, the thickness of the cover plate 2 may be 0.5 mm, 0.8 mm, 1.0 mm, 2.4 mm, 3.7 mm, 4.5 mm, 5 mm, or the like. Certainly, the thickness of the cover plate 2 may alternatively be another value ranging from 0.5 mm to 5 mm, which is not listed one by one herein.

In some embodiments, a length of the chip embedding hole 41 ranges from 2 mm to 25 mm, and a width of the chip embedding hole ranges from 2 mm to 20 mm. According to different types and different sizes of the chip 10, chip embedding holes 41 of different sizes may be produced and manufactured, thereby improving the adaptability of the chip 10 to the cover plate assembly 300.

For example, on the positive cover plate assembly 300a or the negative cover plate assembly 300b, a shape of the chip embedding hole 41 may be a cuboid, a cube, a polygon, or the like.

Optionally, on the positive cover plate assembly 300a or the negative cover plate assembly 300b, the length of the chip embedding hole 41 may be 2 mm, 5 mm, 7 mm, 11 mm, 14 mm, 18 mm, 21 mm, 23 mm, 25 mm, or the like; and the width of the chip embedding hole 41 may be 2 mm, 3 mm, 9 mm, 13 mm, 15 mm, 17 mm, 20 mm, or the like. Certainly, the length of the chip embedding hole 41 may alternatively be another value ranging from 2 mm to 25 mm, and the width of the chip embedding hole 41 may alternatively be another value ranging from 2 mm to 20 mm, which are not listed one by one herein.

For example, on the positive cover plate assembly 300a or the negative cover plate assembly 300b, the chip fixing buckle 5 is connected the insulating plate 4 in a snap-in manner. That is, the insulating plate 4 is provided with a clamping seam, and the clamping seam can accommodate the chip fixing buckle 5. A shape of the clamping seam may be a cuboid, or a shape of the clamping seam may be a cube, a depth of the clamping seam ranges from 0.1 mm to 2 mm, a length of the clamping seam ranges from 0.4 mm to 6 mm, and a width of the clamping seam ranges from 0.3 mm to 2 mm.

For example, on the positive cover plate assembly 300a or the negative cover plate assembly 300b, there are four clamping seams on the insulating plate 4 corresponding to four corner positions of the chip embedding hole 41, and the clamping seams match four chip fixing buckles 5, so that the chip 10 can be better fixed.

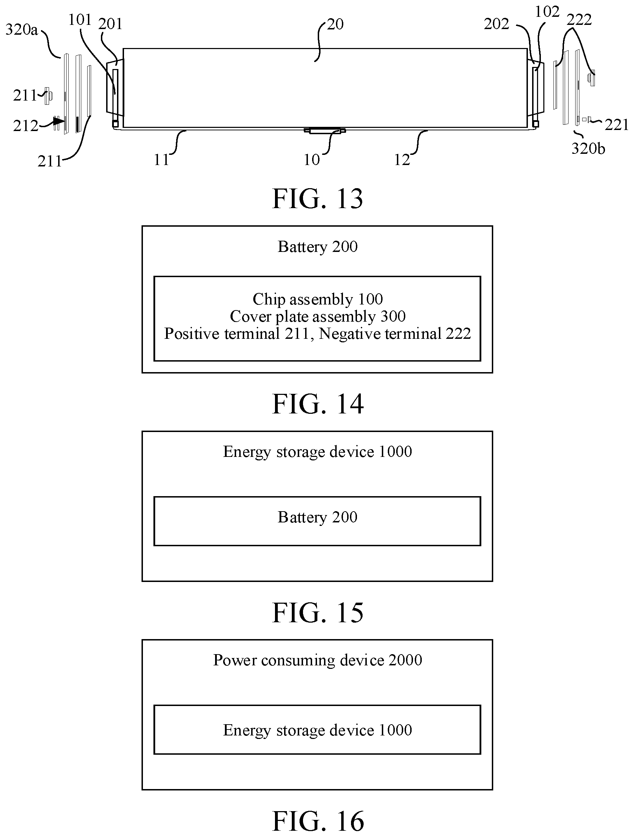

As shown in FIG. 14, the battery 200 according to the embodiments of the present disclosure includes a positive terminal 211, a negative terminal 222, a chip assembly 100, a housing body, and the cover plate assembly 300 according to the embodiments of the present disclosure.

With reference to FIG. 1 and FIG. 8, in some technical solutions, the cover plate assembly 300 may be a main cover plate assembly 300c. The main cover plate assembly 300c includes a main cover plate 23 and an insulating plate 4. A positive terminal hole and a negative terminal hole are provided on the main cover plate 23 and the insulating plate 4. The positive terminal 211 can extend from the positive terminal hole, and the negative terminal 222 can extend from the negative terminal hole. A chip embedding hole 41 is further provided on the insulating plate 4.

With reference to FIG. 3, FIG. 9, and FIG. 11, in some technical solutions, the cover plate assembly 300 may be a combination of a positive cover plate assembly 300a and a second negative cover plate assembly 320b. The positive cover plate assembly 300a includes a positive cover plate 21 and the insulating plate 4. A terminal hole is provided on the positive cover plate 21 and the insulating plate 4. The terminal hole includes only a positive terminal hole. The positive terminal 211 can extend from the positive terminal hole, and the chip embedding hole 41 is further provided on the insulating plate 4. The second negative cover plate assembly 320b includes a second negative cover plate 22d and the insulating plate 4. A negative terminal hole is provided on the second negative cover plate 22d and the insulating plate 4, the chip embedding hole 41 is not provided, and the negative terminal 222 can extend from the negative terminal hole.

With reference to FIG. 2, FIG. 10, and FIG. 12, in some technical solutions, the cover plate assembly 300 may be a combination of a negative cover plate assembly 300b and a second positive cover plate assembly 320a. The negative cover plate assembly 300b includes a negative cover plate 22 and the insulating plate 4. A terminal hole is provided on the negative cover plate 22 and the insulating plate 4, the terminal hole includes only a negative terminal hole. The negative terminal 222 can extend from the negative terminal hole, and the chip embedding hole 41 is further provided on the insulating plate 4. The second positive cover plate assembly 320a includes a second positive cover plate 21d and the insulating plate 4. A positive terminal hole is provided on the second positive cover plate 21d and the insulating plate, the chip embedding hole 41 is not provided, and the positive terminal 211 can extend from the positive terminal hole.

At least one end of the housing body is an open end, the cover plate assembly 300 is arranged at the open end, the cover plate assembly 300 and the housing body form a housing of the battery, and the cover plate assembly 300 and the housing body may form a closed space. Specifically, one end of the housing body is an open end, the cover plate assembly 300 is the main cover plate assembly 300c, and the main cover plate assembly 300c is arranged at the open end. Alternatively, two ends of the housing body are open ends, the cover plate assembly 300 may be the combination of the positive cover plate assembly 300a and the second negative cover plate assembly 320b, the positive cover plate assembly 300a is arranged at one open end of the housing body, and the second negative cover plate assembly 320b is arranged at the other open end of the housing body. Alternatively, two ends of the housing body are open ends, the cover plate assembly 300 may be the combination of the negative cover plate assembly 300b and the second positive cover plate assembly 320a, the negative cover plate assembly 300a is arranged at one open end of the housing body, and the second positive cover plate assembly 320a is arranged at the other open end of the housing body.

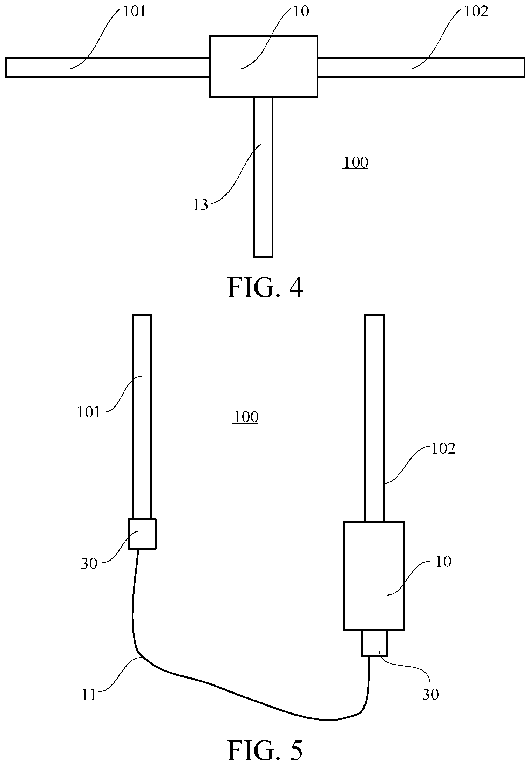

With reference to FIG. 4 to FIG. 13, the chip assembly 100 includes a chip 10, a positive member 101, and a negative member 102. The chip 10 is embedded in the chip embedding hole 41 and the chip 10 includes a circuit board and a detection structure, the circuit board is provided with an integrated circuit, and the detection structure is electrically connected to the circuit board. One end of the positive member 101 is electrically connected to the circuit board, the other end of the positive member 101 is adapted to connect to the positive terminal 211, one end of the negative member 102 is electrically connected to the circuit board, and the other end of the negative member 102 is adapted to connect to the negative terminal 222. Therefore, the detection structure is electrically connected to the circuit board, and the circuit board is electrically connected to the battery 200 through the positive member 101 and the negative member 102. That is, the battery 200 can supply power to the detection structure, and the battery 200 can further supply power to the chip assembly 100. The chip 10 can be embedded in the chip embedding hole 41, so that the chip 10 is fixed to the cover plate 2 more firmly and stably, thereby improving the integration of the chip assembly 100 and the cover plate assembly 300, making the structure more compact. The battery 200 and the chip assembly 100 form an integral and self-powered battery chip assembly, and there is no need to arrange an external power supply to supply power to the chip assembly 100, thereby improving the integration of the battery 200 and the chip assembly 100.

It should be further noted that, the detection structure may be a temperature sensor and a connector associated with the temperature sensor to detect a temperature of the battery 200; the detection structure may be a stress detection apparatus to detect a stress condition in the battery 200; or the detection structure may be an air pressure detection apparatus to detect air pressure in the battery 200. That is, according to different monitoring content and requirements, the detection structure in the chip 10 may be replaced according to different test requirements. Therefore, the detection structure includes, but is not limited to, a temperature sensor, a stress detection apparatus, an air pressure detection apparatus, and the like.

In the battery 200 according to the embodiments of the present disclosure, the chip 10 can be embedded in the chip embedding hole 41, so that the chip 10 is fixed to the cover plate assembly 300 more firmly and stably, thereby improving an integration degree of the chip assembly 100 and the cover plate assembly 300, improving a structural integration degree of the chip assembly 100 and the battery 200, and helping improve the structure compactness. The detection structure is electrically connected to the circuit board, and the circuit board is electrically connected to the battery 200 through the positive member 101 and the negative member 102. That is, the battery 200 can supply power to the detection structure, and the battery 200 can further supply power to the chip assembly 100. In this way, the battery 200 and the chip assembly 100 form an integral and self-powered battery chip assembly, and there is no need to arrange an external power supply to supply power to the chip assembly 100, thereby improving the integration of the battery 200 and the chip assembly 100. The chip assembly 100 is arranged in a housing of the battery, and the chip assembly 100 can monitor a single battery 200, so that temperature, air pressure, and stress changes of the battery 200 can be effectively monitored, and an internal status of the battery 200 can be reflected more accurately. In addition, the chip embedding hole 41 is provided on the insulating plate 4, so that the chip 10 can be fixed in the chip embedding hole 41. Therefore, connection between the chip 10 and the insulating plate 4 becomes tighter, and connection between the chip 10 and the cover plate assembly 300 becomes tighter, so that the chip 10 is connected to the cover plate assembly 300 to form an integral and stable structure, thereby reducing looseness and displacement of the chip 10, and helping improve the stability and reliability of function operation of the chip 10.

In the related art, the detection apparatus is located outside the battery. However, the detection apparatus located outside detects an external status of the battery, and there is a specific difference between the external status of the battery and the internal status of the battery. Therefore, the detection apparatus located outside the battery has low accuracy in reflecting the internal status of the battery. In the present disclosure, the chip assembly 100 is arranged in the housing of the battery, and the chip assembly 100 can monitor a single battery 200, so that the temperature, air pressure, and stress changes of the battery 200 can be effectively monitored, and the internal status of the battery 200 can be reflected more accurately. In this way, high-precision evaluation and safety early warning can be implemented on an operating status and a health status of the battery 200, thereby greatly improve the safety performance of the battery 200.

In some embodiments, the chip 10 further includes a wireless transmission structure. The wireless transmission structure may be electrically connected to the circuit board. The wireless transmission structure may transmit a signal in a wireless communication manner. The wireless transmission structure is at least configured to transmit a signal to an external device. The transmitted signal may include a signal detected by the detection structure, or the signal may include a circuit board status signal of the chip assembly 100 and a signal detected by the detection structure. The wireless transmission structure is arranged to transmit a signal, and there is no need to lead an additional connection line out from the inside of the battery 200. Therefore, there is no need to open a hole in the housing structure of the battery for the connection line to pass through, which helps improve the overall sealing performance of the battery 200.

In some embodiments, the wireless transmission structure may transmit a signal to the external device at an interval of preset time. Alternatively, in some other embodiments, the wireless transmission structure further includes a receiving module and a transmission module. Only when the receiving module receives a trigger command from the external device, the transmission module transmits a signal to the external device.

Optionally, a communication manner of the wireless transmission structure may be 4G communication, 5G communication, Bluetooth, or the like.

For example, a communication rate of the chip 10 ranges from 2 Mbps to 10 Mbps, a stable communication distance ranges from 0.1 m to 1000 m, and a transmission delay is less than 10 ms.

As shown in FIG. 11 to FIG. 13, in some embodiments, the battery 200 further includes an electrode core 20. The electrode core 20 is arranged in the housing body, the electrode core 20 includes a positive tab 201 and a negative tab 202, the positive member 101 and the positive tab 201 are connected to the positive terminal 211, and the negative member 102 and the negative tab 202 are connected to the negative terminal 222. The chip assembly 100 is connected to the positive terminal 211 of the battery 200 through the positive member 101, and the chip assembly 100 is connected to the negative terminal 222 of the battery 200 through the negative member 102, so that a closed circuit is formed between the chip assembly 100 and the electrode core 20 of the battery 200. The electrode core 20 of the battery 200 can supply power to the chip assembly 100, thereby forming an integral and self-powered battery chip assembly, and improving an integration degree of the battery 200 and the chip assembly 100. In addition, the positive member 101 and the positive tab 201 are connected to the positive terminal 211, and the negative member 102 and the negative tab 202 are connected to the negative terminal 222. On one hand, the internal structure of the battery 200 can be more compact, and the utilization of the internal space of the battery 200 can be improved. On the other hand, the electrode core 20 can be monitored, thereby improving the evaluation accuracy and the safety of the battery 200.

As shown in FIG. 4 and FIG. 8 to FIG. 12, in some embodiments, the detection structure further includes a detection belt 13, one end of the detection belt 13 is connected to the circuit board, and the other end of the detection belt 13 is adapted to be inserted into the electrode core 20. Specifically, a detection belt 13 may extend from a middle position of the chip 10, and the detection belt 13 may extend into the electrode core 20 of the battery 200, so as to facilitate more accurate monitoring on the battery 200.

Optionally, when the detection structure is a temperature sensor, a detection belt 13 may extend from the middle position of the chip 10, and the detection belt 13 may extend into a space between an electrode sheet inside the electrode core 20 and a membrane, so as to perform more accurate temperature monitoring on the battery 200.

It should be further noted that, according to a monitoring requirement, a quantity, a length, a width, and the like of the detection belt 13 may be modified and adjusted accordingly.

In some embodiments, the length of the detection belt 13 ranges from 0.5 cm to 100 cm; and/or the width of the detection belt 13 ranges from 0.2 cm to 5 cm; and/or a thickness of the detection belt 13 ranges from 0.2 mm to 1 cm, so that a size of the detection belt 13 can be adjusted according to a type, a size, and a monitoring type of the battery 200, thereby improving the adaptability of the detection belt 13.

Optionally, the length of the detection belt 13 may be 0.5 cm, 4 cm, 17 cm, 21 cm, 54 cm, 94 cm, 100 cm, or the like; the width of the detection belt 13 may be 0.2 cm, 0.4 cm, 1.4 cm, 2.7 cm, 3.6 cm, 4.8 cm, 5.0 cm, or the like; and the thickness of the detection belt 13 may be 0.2 cm, 0.3 cm, 0.4 cm, 0.6 cm, 0.7 cm, 0.9 cm, or 1 cm. Certainly, the length of the detection belt 13 may be another value ranging from 0.5 cm to 100 cm, the width of the detection belt 13 may be another value ranging from 0.2 cm to 5 cm, and the thickness of the detection belt 13 may be another value ranging from 0.2 mm to 1 cm, which are not listed one by one herein.

As shown in FIG. 11, in some embodiments, the cover plate assembly 300 includes a positive cover plate assembly 300a and a second negative cover plate assembly 320b. The positive cover plate assembly 300a is arranged at one end of the housing body, the positive cover plate assembly 300a includes the chip embedding hole 41, the positive terminal 211 is arranged on the positive cover plate assembly 300a, the second negative cover plate assembly 320b is arranged at the other end of the housing body, and the negative terminal 222 is arranged in a negative terminal hole on the second negative cover plate assembly 320b. Therefore, the cover plate assembly 300 can be applicable to different battery types, thereby improving the universality of the cover plate assembly 300.

In some embodiments, the cover plate assembly 300 includes a negative cover plate assembly 300b and a second positive cover plate assembly 320a. The negative cover plate assembly 300b is arranged at one end of the housing body, the negative cover plate assembly 300b includes the chip embedding hole 41, the negative terminal 222 is arranged on the negative cover plate assembly 300b, the second positive cover plate assembly 320a is arranged at the other end of the housing body, and the positive terminal 211 is arranged in a positive terminal hole on the second positive cover plate assembly 320a. Therefore, the cover plate assembly 300 can be applicable to different battery types, thereby improving the universality of the cover plate assembly 300.

In some examples not shown in the figure, the cover plate assembly 300 includes a main cover plate assembly 300c, and the main cover plate assembly 300c is arranged at the open end of the housing body.

As shown in FIG. 5 to FIG. 7, FIG. 11, and FIG. 12, in some embodiments, the positive member 101 is electrically connected to the circuit board through a first wire 11; and/or the negative member 102 is electrically connected to the circuit board through a second wire 12. The connection between the circuit board and the positive member 101 and the connection between the circuit board and the negative member 102 may be implemented by a direct connection solution or a wire switching solution. By using the wire switching manner, a mounting position of the chip 10 can be more flexible, the positive member 101 and the negative member 102 do not need to be located excessively close, and position adjustment can be performed according to different battery types and monitoring types, thereby improving the adaptability of the chip assembly 100.

As shown in FIG. 11, for example, the chip 10 and the positive member 101 are arranged on the positive terminal 211 side, the negative member 102 is arranged on the negative terminal 222 side, and the negative member 102 is connected to the chip 10 through the second wire 12.

As shown in FIG. 12, for example, the chip 10 and the negative member 102 are arranged on the negative terminal 222 side, the positive member 101 is arranged on the positive terminal 211 side, and the positive member 101 is connected to the chip 10 through the first wire 11.

As shown in FIG. 13, for example, one end of the housing body is the second positive cover plate assembly 320a, and the other end is the second negative cover plate assembly 320b. The chip 10 is not arranged on the insulating plate 4, but arranged in an internal cavity of the battery 200. The chip 10 is located at a position between the positive terminal 211 and the negative terminal 222. The positive member 101 is arranged on the positive terminal 211 side, and the positive member 101 is connected to the chip 10 through the first wire 11; and the negative member 102 is arranged on the negative terminal 222 side, and the negative member 102 is connected to the chip 10 through the second wire 12.

As shown in FIG. 11, in some specific examples, the chip 10 is first arranged on the positive terminal 211 side, then the positive member 101 of the chip 10 is connected to the positive tab 201 of the electrode core 20 in one or a combination of an ultrasonic welding manner and a laser welding manner, and then laser welding is performed on the positive tab 201 on which the positive member 101 is welded and the positive terminal 211 on the positive cover plate 21. The negative member 102 is connected to the chip 10 through the second wire 12, the negative member 102 is placed on a negative side of the battery 200, the negative member 102 is welded to the negative tab 202 of the electrode core 20, and after the welding is completed, laser welding is performed on the negative tab 202 and the negative terminal 222 on the negative cover plate 22. In this way, the positive portion of the chip 10 is connected to the positive tab 201, and the negative portion is connected to the negative tab 202, so that a closed circuit is formed in the battery 200, to supply power to the chip 10, thereby forming an integral and self-powered chip.

As shown in FIG. 12, in some specific examples, the chip 10 is first arranged on the negative terminal 222 side, then the negative member 102 of the chip 10 is connected to the negative tab 202 of the electrode core 20 in one or a combination of an ultrasonic welding manner and a laser welding manner, and then laser welding is performed on the negative tab 202 on which the negative member 102 is welded and the negative terminal 222 on the negative cover plate 22. The positive member 101 is connected to the chip 10 through the first wire 11, the positive member 101 is placed on a positive side of the battery 200, the positive member 101 is welded to the positive tab 201 of the electrode core 20, and after the welding is completed, laser welding is performed on the positive tab 201 and the positive terminal 211 on the positive cover plate 21. In this way, the positive portion of the chip 10 is connected to the positive tab 201, and the negative portion is connected to the negative tab 202, so that a closed circuit is formed in the battery 200, to supply power to the chip 10, thereby forming an integral and self-powered chip.

As shown in FIG. 13, in some specific embodiments, the chip 10 is placed between the positive terminal 211 and the negative terminal 222, the positive member 101 is connected to the chip 10 through the first wire 11, the positive member 101 is placed on a positive side of the battery 200, the positive member 101 is welded to the positive tab 201 of the electrode core 20, and after the welding is completed, laser welding is performed on the positive tab 201 and the positive terminal 211 on the positive cover plate 21. The negative member 102 is connected to the chip 10 through the second wire 12, the negative member 102 is placed on a negative side of the battery 200, the negative member 102 is welded to the negative tab 202 of the electrode core 20, and after the welding is completed, laser welding is performed on the negative tab 202 and the negative terminal 222 on the negative cover plate 22. In this way, the positive portion of the chip 10 is connected to the positive tab 201, and the negative portion is connected to the negative tab 202, so that a closed circuit is formed in the battery 200, to supply power to the chip 10, thereby forming an integral and self-powered chip.

It should be further noted that the first wire 11 and the second wire 12 may be made of one or a combination of copper, silver, aluminum, and some alloy materials with good conductivity. The first wire 11 and the second wire 12 are both in a shape of a cylinder with a radius ranging from 0.2 mm to 3 mm and a length ranging from 1 mm to 200 cm.

As shown in FIG. 4 to FIG. 7, for example, an outer surface of the first wire 11 is wrapped with an insulating layer 30 (not shown); an outer surface of the second wire 12 is wrapped with the insulating layer 30 (not shown); and a joint between the second wire 12 and a chip shell is wrapped with the insulating layer 30. By wrapping the insulation layer 30 at the foregoing positions, the chip 10 and the wires can be effectively prevented from being corroded by the electrolyte in the battery 200.

As shown in FIG. 4 to FIG. 7, in some embodiments, the chip 10 includes a chip shell, the circuit board and the detection structure are arranged in the chip shell, and the chip shell can protect the circuit board and the detection structure. The other end of the positive member 101 and the other end of the negative member 102 are both located outside the chip shell. An outer surface of the chip shell is wrapped with the insulating layer 30 (not shown), a joint between the first wire 11 and the chip shell is wrapped with the insulating layer 30, and a joint between the second wire 12 and the chip shell is wrapped with the insulating layer 30. By arranging the insulating layer 30 at the foregoing positions, the chip shell can be protected, and the joint between the first wire 11 and the chip shell and the joint between the second wire 12 and the chip shell can also be protected, to prevent the chip shell, the joint between the first wire 11 and the chip shell, and the joint between the second wire 12 and the chip shell from being corroded by the electrolyte in the battery 200.

Optionally, the chip shell may be a hard shell or a soft shell.

For example, the insulating layer 30 may further wrap a surface of a welded joint.

For example, the insulating layer 30 may be made of one or a combination of materials such as polyimide, polypropylene, and polyethylene.

In some examples not shown in the figure, a housing of the battery includes only a housing body and a positive cover plate assembly. An opening is provided at an end of the housing body, and the positive cover plate 21 is arranged at the opening of the housing body. The positive terminal 211 is arranged on the positive cover plate 21, and the positive member 101 and the positive tab 201 are connected to the positive terminal 211. The negative terminal 222 is arranged on the housing body and in contact with the housing body, and the negative member 102 and the negative tab 202 are connected to the negative terminal 222. The housing body is negatively charged.

It should be noted that, the positive member 101 of the chip 10 may be first connected to the positive tab 201 of the electrode core 20, and the negative member 102 of the chip 10 is connected to the negative tab 202 of the electrode core 20; and then the positive tab and the negative tab are welded to the corresponding positive terminal 201 and negative terminal 202. This connection manner is simple and practical.

In some embodiments, the battery 200 may be a blade-shaped battery. For example, a length of the blade-shaped battery may range from 400 mm to 700 mm. For another example, the length of the blade-shaped battery may be greater than 700 mm. The battery 200 may alternatively be a cylindrical battery, a square battery, or a pouch battery. The structure in which the chip 10 is embedded into the cover plate assembly 300 is applicable to all batteries 200 including the cover plate 2, and it is only required that a size of the chip embedding hole 41 on the insulating plate 4 in the cover plate assembly 300 and a size of the chip 10 are correspondingly adjusted and modified according to different configurations of the battery 200.

As shown in FIG. 11 to FIG. 13, in some specific examples, the insulating plate 4 is arranged between the positive terminal 211 and the positive cover plate 21, and the insulating plate 4 is arranged between the negative terminal 222 and the negative cover plate 22. By arranging the insulating plate 4, it can be implemented that the positive terminal 211 and the negative terminal 222 are charged while the positive cover plate 21 and the negative cover plate 22 are not charged, thereby preventing a current from being conducted to the housing body through the positive cover plate 21 and the negative cover plate 22 and reducing a short-circuit risk.

As shown in FIG. 15, the energy storage device 1000 according to the embodiments of the present disclosure includes multiple batteries 200 according to the embodiments of the present disclosure, and by arranging the batteries 200, the safety of the power consuming device 2000 can be improved. The chip 10 can be embedded in the chip embedding hole 41, so that the chip 10 is fixed to the insulating plate 4 more firmly and stably, thereby improving an integration degree of the chip assembly 100 and the cover plate assembly 300, and improving a structural integration degree of the chip assembly 100 and the battery 200. The detection structure is electrically connected to the circuit board, and the circuit board is electrically connected to the battery 200 through the positive member 101 and the negative member 102. That is, the battery 200 can supply power to the detection structure, and the battery 200 can further supply power to the chip assembly 100. In this way, the battery 200 and the chip assembly 100 form an integral and self-powered battery chip assembly, and there is no need to arrange an external power supply to supply power to the chip assembly 100, thereby improving the integration of the battery 200 and the chip assembly 100. In addition, the chip assembly 100 is arranged in a housing of the battery, and the chip assembly 100 can monitor a single battery 200, so that temperature, air pressure, and stress changes of the battery 200 can be effectively monitored, and an internal status of the battery 200 can be reflected more accurately. In addition, the chip embedding hole 41 is provided on the insulating plate 4, so that the chip 10 can be fixed in the chip embedding hole 41. Therefore, connection between the chip 10 and the insulating plate 4 becomes tighter, and connection between the chip 10 and the cover plate assembly 300 becomes tighter, so that the chip 10 is connected to the cover plate assembly 300 to form an integral and stable structure, thereby reducing looseness and displacement of the chip 10, helping improve the stability and reliability of function operation of the chip 10, and helping improve the structure compactness.

As shown in FIG. 16, the power consuming device 2000 according to the embodiments of the present disclosure includes the energy storage device 1000 according to the embodiments of the present disclosure, and by arranging the batteries 200, the safety of the power consuming device 2000 can be improved. The chip 10 can be embedded in the chip embedding hole 41, so that the chip 10 is fixed to the insulating plate 4 more firmly and stably, thereby improving an integration degree of the chip assembly 100 and the cover plate assembly 300, and improving a structural integration degree of the chip assembly 100 and the battery 200. The detection structure is electrically connected to the circuit board, and the circuit board is electrically connected to the battery 200 through the positive member 101 and the negative member 102. That is, the battery 200 can supply power to the detection structure, and the battery 200 can further supply power to the chip assembly 100. In this way, the battery 200 and the chip assembly 100 form an integral and self-powered battery chip assembly, and there is no need to arrange an external power supply to supply power to the chip assembly 100, thereby improving the integration of the battery 200 and the chip assembly 100. In addition, the chip assembly 100 is arranged in a housing of the battery, and the chip assembly 100 can monitor a single battery 200, so that temperature, air pressure, and stress changes of the battery 200 can be effectively monitored, and an internal status of the battery 200 can be reflected more accurately. In addition, the chip embedding hole 41 is provided on the insulating plate 4, so that the chip 10 can be fixed in the chip embedding hole 41. Therefore, connection between the chip 10 and the insulating plate 4 becomes tighter, and connection between the chip 10 and the cover plate assembly 300 becomes tighter, so that the chip 10 is connected to the cover plate assembly 300 to form an integral and stable structure, thereby reducing looseness and displacement of the chip 10, helping improve the stability and reliability of function operation of the chip 10, and helping improve the structure compactness.

Optionally, the power consuming device 2000 may be a vehicle, a ship, an airplane, a machine tool, a household appliance, or the like.

In the description of the present disclosure, it should be understood that direction or position relationships indicated by terms such as "longitudinal", "transverse", "length", "width", "thickness", "upper", "lower", "front", "rear", "left", "right", "vertical", "horizontal", "top", "bottom", "inner", "outer", and the like are direction or position relationships based on the accompanying drawings, and are used only for conveniently describing the present disclosure and simplifying the description, instead of indicating or implying that a mentioned apparatus or element needs to have a particular orientation or be constructed and operated in a particular orientation, and therefore shall not be understood as a limitation on the present disclosure.

In the present disclosure, unless otherwise clearly specified and limited, the terms "mount", "connect", "connection", and "fix" should be understood in a broad sense. For example, the connection may be a fixed connection, a detachable connection, or an integral connection; or may be a mechanical connection, an electrical connection, or mutual communication; or may be a direct connection, an indirect connection through an intermediate medium, or communication of two elements or an interaction relationship of two elements. A person of ordinary skill in the art may understand specific meanings of the terms in the present disclosure according to specific situations.

In the description of this specification, the description made with reference to the terms such as "an embodiment", "some embodiments", "an example", "a specific example", or "some examples" means that specific features, structures, materials, or characteristics described with reference to the embodiment or the example are included in at least one embodiment or example of the present disclosure. In this specification, schematic description of the foregoing terms does not necessarily aim at a same embodiment or example. Moreover, the specific features, structures, materials, or characteristics described may be combined in any one or more embodiments or examples in an appropriate manner. In addition, a person skilled in the art may combine different embodiments or examples described in this specification.

Although the embodiments of the present disclosure are shown and described above, it may be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

1. A cover plate assembly (300), comprising:
a cover plate (2);
an insulating plate (4), the insulating plate (4) being arranged on a side of the cover plate (2), a terminal hole for a terminal to pass through being provided on the cover plate (2) and the insulating plate (4), and a chip embedding hole (41) for fixing a chip (10) being provided on the insulating plate (4).

2. The cover plate assembly (300) according to claim 1, wherein the chip embedding hole (41) is provided on a side surface of the insulating plate (4) facing away from the cover plate (2).

3. The cover plate assembly (300) according to claim 1 or 2, further comprising a chip fixing buckle (5), the chip fixing buckle (5) being arranged on the insulating plate (4), a chip accommodating space for fixing the chip (10) being formed between the chip fixing buckle (5) and the chip embedding hole (41), and the chip fixing buckle (5) being configured to fix the chip (10) to the chip embedding hole (41);
optionally wherein a clamping seam is provided on the insulating plate (4), one end of the chip fixing buckle (5) is snapped into the clamping seam, and the other end of the chip fixing buckle (5) and a hole wall of the chip embedding hole (41) jointly define the chip accommodating space.

4. The cover plate assembly (300) according to any one of claims 1 to 3, wherein the terminal hole comprises a positive terminal hole and a negative terminal hole, and the chip embedding hole (41) is located between the positive terminal hole and the negative terminal hole;
optionally wherein the chip embedding hole (41) is a blind hole, a depth of the chip embedding hole (41) ranges from 0.5 mm to 7 mm, and in an axial direction of the chip embedding hole (41), a remaining thickness of the insulating plate (4) ranges from 0.5 mm to 7.5 mm; and/or a thickness of the cover plate (2) ranges from 0.5 mm to 5 mm;
further optionally wherein a length of the chip embedding hole (41) ranges from 2 mm to 25 mm, and a width of the chip embedding hole ranges from 2 mm to 20 mm.

5. The cover plate assembly (300) according to any one of claims 1 to 4, wherein the terminal hole is a positive terminal hole, a liquid injection hole (212) is provided on the cover plate (2) and the insulating plate (4), and the chip embedding hole (41) is located between the positive terminal hole and the liquid injection hole (212).

6. The cover plate assembly (300) according to any one of claims 1 to 5, wherein the terminal hole is a negative terminal hole, an anti-explosion valve hole is provided on the cover plate (2) and the insulating plate (4), and the chip embedding hole (41) is located between the negative terminal hole and the anti-explosion valve hole.

7. The cover plate assembly (300) according to claim 5 or 6, wherein the chip embedding hole (41) is a blind hole, a depth of the chip embedding hole (41) ranges from 0.5 mm to 4 mm, and in an axial direction of the chip embedding hole (41), a remaining thickness of the insulating plate (4) ranges from 0.5 mm to 3.5 mm; and/or a thickness of the cover plate (2) ranges from 0.5 mm to 5 mm;
optionally wherein a length of the chip embedding hole (41) ranges from 2 mm to 25 mm, and a width of the chip embedding hole ranges from 2 mm to 20 mm.

8. A battery (200), comprising:
the cover plate assembly (300) according to any one of claims 1 to 7;
a positive terminal (211) and a negative terminal (222), at least one of the positive terminal (211) and the negative terminal (222) being provided in the terminal hole;
a housing body, at least one end of the housing body being an open end, and the cover plate assembly (300) being arranged at the open end; and
a chip assembly (100), the chip assembly (100) comprising a chip (10), a positive member (101), and a negative member (102), the chip (10) being embedded in the chip embedding hole (41) and comprising a circuit board and a detection structure, the circuit board being provided with an integrated circuit, the detection structure being electrically connected to the circuit board, one end of the positive member (101) being electrically connected to the circuit board, the other end of the positive member (101) being adapted to connect to the positive terminal (211), one end of the negative member (102) being electrically connected to the circuit board, and the other end of the negative member (102) being adapted to connect to the negative terminal (222).

9. The battery (200) according to claim 8, wherein the chip (10) further comprises a wireless transmission structure, the wireless transmission structure is electrically connected to the circuit board, and the wireless transmission structure is at least configured to transmit a signal detected by the detection structure to an external device in a wireless communication manner.

10. The battery (200) according to claim 8 or 9, further comprising an electrode core (20), the electrode core (20) being arranged in the housing body, the electrode core (20) comprising a positive tab (201) and a negative tab (202), the positive member (101) and the positive tab (201) being connected to the positive terminal (211), and the negative member (102) and the negative tab (202) being connected to the negative terminal (222);
optionally wherein the detection structure comprises a detection belt (13), one end of the detection belt (13) is connected to the circuit board, and the other end of the detection belt (13) is adapted to be inserted into the electrode core (20).

11. The battery (200) according to any one of claims 8 to 10, wherein the cover plate assembly (300) comprises a positive cover plate assembly (300a) and a second negative cover plate assembly (320b), the positive cover plate assembly (300a) is arranged at one end of the housing body, the positive cover plate assembly (300a) comprises the chip embedding hole (41), the positive terminal (211) is arranged on the positive cover plate assembly (300a), the second negative cover plate assembly (320b) is arranged at the other end of the housing body, and the negative terminal (222) is arranged in a negative terminal hole on the second negative cover plate assembly (320b).

12. The battery (200) according to any one of claims 8 to 11, wherein the cover plate assembly (300) comprises a negative cover plate assembly (300b) and a second positive cover plate assembly (320a), the negative cover plate assembly (300b) is arranged at one end of the housing body, the negative cover plate assembly (300b) comprises the chip embedding hole (41), the negative terminal (222) is arranged on the negative cover plate assembly (300b), the second positive cover plate assembly (320a) is arranged at the other end of the housing body, and the positive terminal (211) is arranged in a positive terminal hole on the second positive cover plate assembly (320a).

13. The battery (200) according to any one of claims 8 to 12, wherein the positive member (101) is electrically connected to the circuit board through a first wire (11); and/or the negative member (102) is electrically connected to the circuit board through a second wire (12).

14. An energy storage device (1000), comprising a plurality of batteries (200) according to any one of claims 8 to 13.

15. A power consuming device (2000), comprising the energy storage device (1000) according to claim 14.
